# EUROPEAN PATENT APPLICATION

(11) **EP 4 814 264 A1**
(43) Date of publication of application: **30.09.2026**
(21) Application number: 26164948.7
(22) Date of filing: 16.03.2026
(51) Int. Cl.: F01D 21/00, F01D 21/10, F01D 25/04, F01D 25/06, F02K 3/06

(54) **UNDUCTED TURBINE ENGINE CONDITION DETECTION SYSTEM AND METHOD**

(30) Priority: 27.03.2025 US 202519092998
(71) Applicant: General Electric Company, Cincinnati, Ohio 45215 (US)
(72) Inventor: KHALID, Inenhe Mohammed, West Chester, 45069 (US); TIRUMALAI, Srihari Mukesh M., 560066 Bengaluru (IN); YALLAPALLI, Avichandra, 560066 Bengaluru (IN)
(74) Representative: Openshaw & Co.

(57) **Abstract**

An unducted turbine engine system (200) may include an emitter (212) positioned to direct an energy beam (214) towards a surface (205) of an airfoil (204) of an engine (100) to produce a reflected beam (216). The unducted turbine engine system (200) may include a detector (218) positioned to capture data from the reflected beam (216). The unducted turbine engine system (200) may include a processor (222) configured to determine a condition of the engine (100) based on data captured by the detector (218).

## Description

### FIELD OF THE DISCLOSURE

The present subject matter relates generally to turbine engines, and specifically to a condition detection system for turbine engines.

### BACKGROUND

Aircraft turbine engines include fan blades and guide vanes that are susceptible to damage and aeromechanical instabilities such as flutters during operation. In-flight monitoring of engine conditions can significantly reduce the risk of severe engine damage and failure.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures.
FIG. 1 illustrates a cross-sectional side view of an embodiment of a propulsion system in accordance with some embodiments of the present disclosure.
FIG. 2 illustrates a block diagram of an engine system in accordance with some embodiments of the present disclosure.
FIG. 3 illustrates an engine system in accordance with some embodiments of the present disclosure.
FIG. 4 illustrates an engine system in accordance with some embodiments of the present disclosure.
FIG. 5 illustrates an engine system in accordance with some embodiments of the present disclosure.
FIG. 6 illustrates a flow diagram of a process of an engine system in accordance with some embodiments of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the disclosure. In fact, it will be apparent to those skilled in the art that various modifications and variations can be made in the present disclosure without departing from the scope or spirit of the disclosure. For instance, features illustrated or described as part of one embodiment can be used with another embodiment to yield a still further embodiment. Thus, it is intended that the present disclosure covers such modifications and variations as come within the scope of the appended claims and their equivalents.

As used herein, the terms "first," "second," "third," etc. may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a," "an," and "the" include plural referents unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about," "approximately," "almost," and "substantially" are not to be limited to the precise value specified. In some instances, the approximating language may correspond to the precision of an instrument for measuring the value. For example, the approximating language may refer to being within a 1, 2, 4, 10, 15, or 20 percent margin. These approximating margins may apply to a single value, either or both endpoints defining numerical ranges, and/or the margin for ranges between endpoints. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The present disclosure provides systems and methods for turbine engine with an integrated condition detection system. A condition detection system utilizes energy beam transmitters and detectors to monitor fan blades and/or guide vanes in flight. By directing one or more energy beams toward an airfoil and analyzing the reflected beam, the system can detect one or more engine conditions based on captured data, such vibratory responses of the airfoils. This approach offers a more efficient and accurate means of monitoring blade vibrations in-flight by providing a means to directly monitor airfoil condition from the surface of the airfoil with sensors integrated into the engine assembly, thereby improving the overall safety and performance of turbine engines. As used herein, "airfoil" generally refers to a structure with a curved surface designed to affect airflow, such as a fan blade or a guide vane.

In some aspects, a turbine engine system for determining engine conditions is provided. The system is configured to detect engine conditions based on an energy beam emitted by an emitter which is positioned on the engine to create a reflected beam detectable by a detector. The detector is configured to capture data from the reflected beam and transmit the data to a processor configured to determine the conditions of the engine.

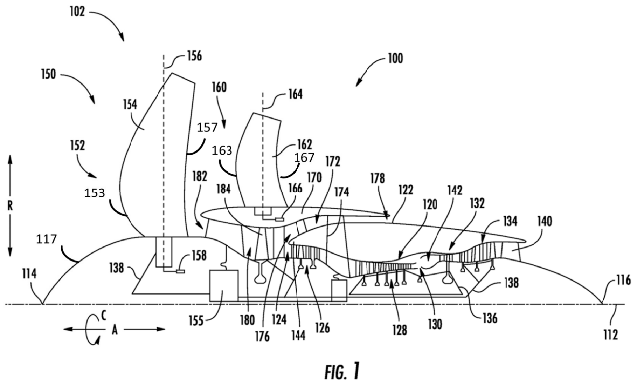

Referring now to FIG. 1, a schematic cross-sectional view of a gas turbine engine 100 is provided. FIG. 1 provides an engine 100 having a rotor assembly with a single stage of unducted rotor blades 154. In such a manner, the rotor assembly may be referred to herein as an "unducted fan," or the entire gas turbine engine 100 may be referred to as an "unducted engine," or an engine having an open rotor propulsion system 102. In addition, the engine of FIG. 1 includes a mid-fan stream extending from the compressor section to a rotor assembly flow path over the turbomachine, as will be explained in more detail below. It is also contemplated that, in other embodiments, the present disclosure is compatible with an engine having a duct around the unducted fan. It is also contemplated that, in other embodiments, the present disclosure is compatible with a turbofan engine having a third stream as described herein.

For reference, the gas turbine engine 100 defines an axial direction A, a radial direction R, and a circumferential direction C. Moreover, the gas turbine engine 100 defines an axial centerline or longitudinal axis 112 that extends along the axial direction A. In general, the axial direction A extends parallel to the longitudinal axis 112, the radial direction R extends outward from and inward to the longitudinal axis 112 in a direction orthogonal to the axial direction A, and the circumferential direction extends three hundred sixty degrees (360°) around the longitudinal axis 112. The gas turbine engine 100 extends between a forward end 114 and an aft end 116, e.g., along the axial direction A.

The gas turbine engine 100 includes a turbomachine 120, also referred to as a core of the gas turbine engine 100, and a rotor assembly, also referred to as a fan section 150, positioned upstream thereof. Generally, the turbomachine 120 includes, in serial flow order, a compressor section, a combustion section, a turbine section, and an exhaust section. Particularly, as shown in FIG. 1, the turbomachine 120 includes a core cowl 122 that defines an annular core inlet 124. The core cowl 122 further encloses at least in part a low-pressure system and a high-pressure system. For example, the core cowl 122 depicted encloses and supports at least in part a booster or low pressure ("LP") compressor 126 for pressurizing the air that enters the turbomachine 120 through core inlet 124. A high pressure ("HP"), multi-stage, axial-flow compressor 128 receives pressurized air from the LP compressor 126 and further increases the pressure of the air. The pressurized air stream flows downstream to a combustor 130 of the combustion section where fuel is injected into the pressurized air stream and ignited to raise the temperature and energy level of the pressurized air and produce high energy combustion products.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems and are not meant to imply any absolute speed and/or pressure values.

The high energy combustion products flow from the combustor 130 downstream to a high-pressure turbine 132. The high-pressure turbine 132 drives the high-pressure compressor 128 through a high-pressure shaft 136. In this regard, the high-pressure turbine 132 is drivingly coupled with the high-pressure compressor 128. The high energy combustion products then flow to a low-pressure turbine 134. The low-pressure turbine 134 drives the low-pressure compressor 126 and components of the fan section 150 through a low-pressure shaft 138. In this regard, the low-pressure turbine 134 is drivingly coupled with the low-pressure compressor 126 and components of the fan section 150. The LP shaft 138 is coaxial with the HP shaft 136 in this example embodiment. After driving each of the turbines 132, 134, the combustion products exit the turbomachine 120 through a core or turbomachine exhaust nozzle 140.

Accordingly, the turbomachine 120 defines a working gas flow path or core duct 142 that extends between the core inlet 124 and the turbomachine exhaust nozzle 140. The core duct 142 is an annular duct positioned generally inward of the core cowl 122 along the radial direction R. The core duct 142 (e.g., the working gas flowpath through the turbomachine 120) may be referred to as a second stream.

The fan section 150 includes a fan 152, which is the primary fan in this example embodiment. For the depicted embodiment of FIG. 1, the fan 152 is an open rotor or unducted fan 152. As depicted, the fan 152 includes an array of fan blades 154. The fan blades 154 are rotatable, e.g., about the longitudinal axis 112. In FIG. 1, the fan 152 is drivingly coupled with the low-pressure turbine 134 via the LP shaft 138. The fan 152 can be directly coupled with the LP shaft 138, e.g., in a direct-drive configuration. However, for the embodiments shown in FIG. 1, the fan 152 is coupled with the LP shaft 138 via a speed reduction gearbox 155, e.g., in an indirect-drive or geared-drive configuration. A spinner 117 encloses the hub of the fan section 150 that connects to the LP shaft 138 and is coupled to the root of the fan blades 154 and rotates with the fan blades 154. While the spinner 117 is illustrated as including a nose cone, in some embodiments, such as in an engine with a forward inlet, the spinner 117 may be annular and aft of a stationary nose of the engine 100.

The fan blades 154 can be arranged in equal spacing around the longitudinal axis 112. Each fan blade includes a leading edge 153 and a trailing edge 157. Each fan blade 154 has a root near the engine core and a tip away from the engine core, and a span defined therebetween. Each fan blade 154 defines a central blade axis 156. For this embodiment, each fan blade 154 of the fan 152 is rotatable about their respective central blade axis 156, e.g., in unison with one another. One or more actuators 158 are provided to facilitate such rotation and therefore may be used to change a pitch of the fan blades 154 about their respective central blade axis 156.

The fan section 150 further includes a fan guide vane array -- that includes fan guide vanes 162 disposed around the longitudinal axis 112. For this embodiment, the fan guide vanes 162 are not rotatable about the longitudinal axis 112. Each fan guide vane 162 has a leading edge 163 and a trailing edge 167. Each fan guide vane 162 further has a root and a tip and a span defined therebetween. The fan guide vanes 162 may be unshrouded as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about their respective central blade axis 164, e.g., in unison with one another. One or more actuators 166 are provided to facilitate such rotation and therefore may be used to change a pitch of the fan guide vane 162 about their respective central blade axis 164. However, in other embodiments, each fan guide vane 162 may be fixed or unable to be pitched about its central blade axis 164. The fan guide vanes 162 are mounted to a fan cowl 170. In some embodiments, for engines without a ducted fan 184, the fan guide vanes may be mounted on the core cowl 122.

As shown in FIG. 1, in addition to the fan 152, which is unducted, a ducted fan 184 is included aft of the fan 152, such that the gas turbine engine 100 includes both a ducted and an unducted fan which both serve to generate thrust through the movement of air without passage through at least a portion of the turbomachine 120 (e.g., the HP compressor 128 and combustion section for the embodiment depicted). The ducted fan 184 may be at about the same axial location as the fan blade 154 or the vanes 162, and radially inward of the fan blade 154 or the vanes 162. The ducted fan 184, for the embodiment depicted, is driven by the low-pressure turbine 134 (e.g., coupled to the LP shaft 138).

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan flow path or fan duct 172. The fan flowpath or fan duct 172 may be referred to as a third stream of the gas turbine engine 100.

Incoming air may enter through the fan duct 172 through a fan duct inlet 176 and may exit through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially extending, circumferentially spaced stationary struts 174 (only one shown in FIG. 1). The stationary struts 174 may each be aerodynamically contoured to direct air flowing thereby. Other struts in addition to the stationary struts 174 may be used to connect and support the fan cowl 170 and/or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl.

The gas turbine engine 100 also defines or includes an inlet duct 180. The inlet duct 180 extends between an engine inlet 182 and the core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a splitter or leading edge 144 of the core cowl 122. The inlet duct 180 is wider than the core duct 142 along the radial direction R. The inlet duct 180 is also wider than the fan duct 172 along the radial direction R.

It will be appreciated, however, that the single rotor unducted engine 100 depicted in FIG. 1 is by way of example only, the engine 100 may have any other suitable configuration, including, for example, any other suitable number of fan blades 154, fans 152, fan guide vanes 162, fan guide vane array 160, shafts or spools, turbines, compressors, etc.; fixed- pitch blades, a direct-drive configuration (i.e., may not include the gearbox 155); etc. For example, some embodiments, the engine 100 may be a three-spool engine, having an intermediate speed compressor and/or turbine. In such a configuration, it will be appreciated that the terms "high" and "low," as used herein with respect to the speed and/or pressure of a turbine, compressor, or spool are terms of convenience to differentiate between the components, but do not require any specific relative speeds and/or pressures, and are not exclusive of additional compressors, turbines, and/or spools or shafts.

Additionally, or alternatively, in some embodiments, any other engine types may be provided. For example, in some embodiments, the engine may be a turboshaft engine, a turboprop engine, a turbojet engine, a rotorcraft engine, a ducted engine, any type of unducted engine, etc. Moreover, for example, although the engine is depicted as a single unducted rotor engine, in other embodiments, the engine may include a multi-stage open rotor configuration or a ducted engine, and aspects of the disclosure described herein below may be incorporated therein.

As used herein, "rotating element" refers to one or more components of the gas turbine engine 100 that rotates about the longitudinal axis 112 in operation, for example, the unducted fan 152, fan blade 154, and spinner 117, the ducted fan 184, and other components that rotate therewith. As used herein, "stationary element" refers to one or more components of the gas turbine engine 100 that do not rotate about the longitudinal axis 112 relative to the engine core, such as the core cowl 122, fan cowl 170, the fan guide vane array 160, and the like. As used herein, "airfoil" refers to streamlined components of the engine for generating lift and/or reducing drag, such as fan blades 154, fan guide vanes 162, and fan blades of ducted fan 184.

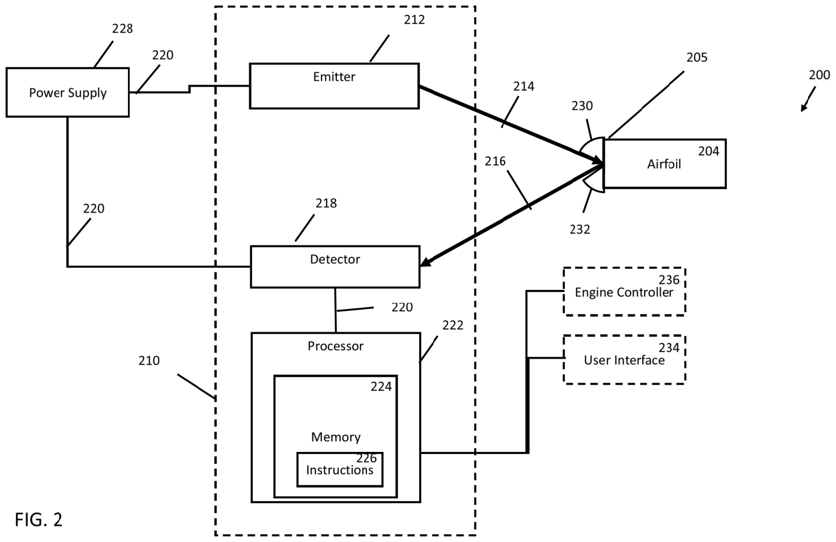

Referring now to FIG. 2, a block diagram of an engine system with an integrated condition monitoring system is shown. The engine system 200 includes an engine 100 (FIG. 1) including one or more airfoils 204, and a condition detection system 210 including an emitter 212, a detector 218, a signal processor 222, and one or more connectors 220. Generally, the condition detection system 210 is configured to monitor the conditions of components of the engine 100 during flight via energy beam emitters and detectors, such as optical emitters and detectors.

The emitter 212 is disposed on the engine 100 and positioned to direct an energy beam 214 towards a surface 205 of an airfoil 204 of the engine 100 to produce a reflected beam 216. The emitter 212 generally has a direct optical path to an exterior surface of the airfoil 204 during at least a portion of the rotation of the rotating element of the engine. The airfoil 204 may be a rotating fan blade or a stationary guide vane. In some aspects, the emitter 212 may be a laser emitter, a light emitting diode (LED), an ultrasound emitter, or the like, and the energy beam may include laser beams, visible spectrum light, infrared light, ultrasound, etc. The surface 205, may be an exterior surface that directly contacts airflow on a suction side, a pressure side, a leading edge, and/or a trailing edge of the airfoil 204. In some embodiments, the emitter 212 is positioned to direct the energy beam 214 along a profile of a leading edge or a trailing edge of the airfoil 204.

The detector 218 is disposed on the engine 100 and positioned and oriented to capture data from the reflected beam 216 reflected off of the surface 205 over time. The detector 218 generally has a direct optical path to an exterior surface of the airfoil 204 during at least a part of the rotation of the rotating element of the engine. The detector 218 may be an optical sensor, an ultrasound sensor, and the like.

Generally, the angle between the energy beam 214 and the surface 205 of the airfoil 204 is referred to as the incident angle 230, and the angle between the reflected beam 216 and the surface 205 of the airfoil 204 is referred to as the reflection angle 232. In some embodiments, an emitter 212 fixed relative to the monitored airfoil 204 is positioned to direct the energy beam 214 with an incident angle 230 greater than 15 degrees and up to 75 degrees relative to the surface 205 of the airfoil 204. In some embodiments, a detector 218 that is fixed relative to the monitored airfoil 204 is positioned to detect a reflected beam with a reflection angle greater than 15 degrees and up to 75 degrees relative to the surface 205 of the airfoil. Generally, an emitter 212 or a detector 218 that rotates with a fan blade is considered fixed in position relative to the fan blade, while an emitter 212 or a detector 218 that is on a stationary element is considered fixed in position relative to a guide vane. In some embodiments, the incident angle 230 and/or the reflection angle 232 is selected to increase the area of deflection of the beam on the surface 205 such that data can be captured from a greater surface area of the airfoil 204. In some embodiments, for a variable pitch fan blade or guide vane, the emitter 212 and the detector 218 are positioned such that the energy beam 214 would reflect off of a surface of the airfoil to be captured by the detector 218 at the minimal and maximum pitch of the airfoil. In some embodiments, the emitter 212 may include a beam steerer such as mirrors, electro-optic deflectors (EOD), or micro-electro-mechanical systems (MEMS) to change the projection angle of the energy beam 214.

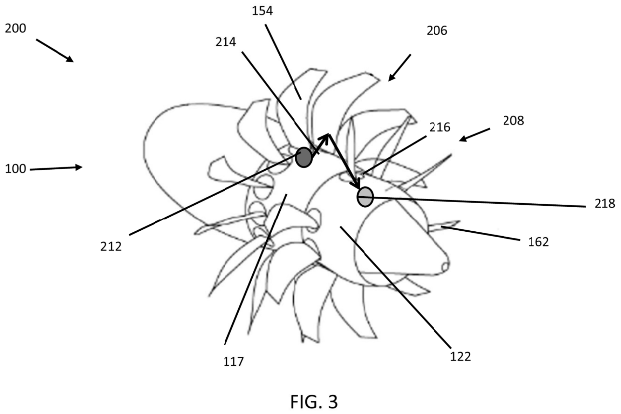

As described in further detail with reference to FIGS. 3 to 5 below, the detector 218 and the emitter 212 may each be coupled to a stationary element or a rotating element of the engine. In some embodiments, the emitter 212 and the detector 218 may be embedded into and/or integrated with a surface on the exterior of the engine 100 shown in FIG. 1, such as the spinner 117, the fan cowl 170, the core cowl 122, or the fan guide vanes 162. For example, the emitter 212 and the detector 218 may be mounted over an engine surface or embedded into an opening of a surface of the engine 100. In some embodiments, wires connecting the emitter 212 and/or the detector 218 directly or indirectly to the power supply 228 and/or the processor 222 may run along and/or through an exterior surface of the engine such as the surface of the core cowl 122.

The emitter 212 and the detector 218 are each coupled to the power supply and/or the processor 222 via one or more connectors 220. The one or more connectors 220 may include one or more of a wired connection, a wireless connector, a slip ring, an inductively coupled transmission system, etc. A slip ring generally refers to an electromechanical device that includes a rotatable electrical interface that allows power and/or data transmission between a stationary and a rotating structure. In some embodiment, the one or more connectors 220 may include a pancake type or a through bore slip ring. A single slip ring may provide multiple connections, such as a data signal connection to the processor and a power connection to the power supply.

In some embodiments, an emitter 212 or detector 218 that is positioned on a stationary element of an engine may receive power via a wired connector 220 to the power supply 228. A detector 218 that is coupled to a stationary element of an engine may transmit data to the processor 222 via a wired connector 220. An emitter 212 or a detector 218 that is positioned on a rotating element of the engine 100 may receive power from a battery, an inductively coupled transmission system, a slip ring between the rotating element and a stationary element of the engine, or the like. In some embodiments, the emitter 212 and/or the detector 218 on a rotating element may communicate with the processor via a wireless data connector or a slip ring between the rotating element and a stationary element of the engine. In some embodiments, the emitter 212 may not be connected to the processor 222, and is turned on and off via the one or more connectors 220 to the power supply 228.

While one emitter 212 and detector 218 pair is shown in Fig. 2, in some embodiments, the unducted turbine engine system 200 may include any number of emitters 212 and detectors 218 for monitoring any number of airfoils 204. In some embodiments, a detector 218 may be positioned to capture reflected beams from a plurality of emitters 212 and airfoils 204. For example, multiple emitters 212 may be positioned between fan blades, each directing a beam to be reflected off of a different airfoil 204. A single detector 218 may capture reflected beams from each emitter 212 and airfoil 204 as the fan rotates. Similarly, a single emitter 212 may be positioned on a stationary element to output a beam that is reflected by multiple rotating airfoils 204 in rotation and captured by multiple detectors 218 on the rotating element.

The power supply 228 is coupled to and provides power to one or more components of the unducted turbine engine system 200 including the emitter 212 and/or the detector 218. While the power supply 228 is shown as a single block in FIG. 2, in some embodiments, the power supply 228 may include one or more power sources such as one or more batteries or an alternator/generator generating electricity power from the rotation of the engine 100. For example, in some embodiments, an emitter 212 or a detector 218 on a rotating component may receive power from a battery on the rotating component while an emitter 212/ or a detector 218 on a stationary element may receive power from the engine alternator. In other embodiments, an emitter 212 or a detector 218 on a rotating element may also receive power from the engine alternator via connectors 220 such as a slip ring between the rotating element and the station element.

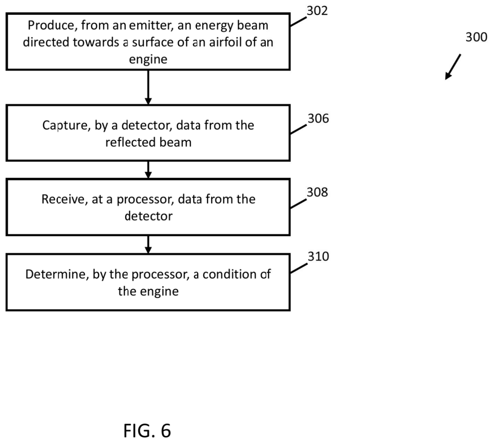

The processor 222 includes memory 224 and is configured to execute computer readable instructions 226 stored on the memory 224. The processor 222 is configured to determine a condition of the engine 100 based on the data captured by the detector 218. The condition of the engine 100 detected by the processor 222 may include wear, damage, defect, aeromechanical instability, etc. In this context, the term processor 222 refers broadly to any microcontroller, computer, or processor-based device with processor, memory (i.e., memory 224), and programmable input/output peripherals, which is generally designed to govern the operation of other components and devices. It is further understood to include common accompanying accessory devices, including external memory, transceivers for communication with other components and devices, etc. The processor 222 may be configured (for example, by using corresponding programming stored in a memory as will be well understood by those skilled in the art) to conduct one or more of the steps, actions, and/or functions (i.e., the instructions 226) described herein. The functions of the processor 222 are described in further detail with reference to FIG. 6 herein.

The processor 222 may output the detected condition to an engine controller 236 and/or a user interface device 234. The engine controller 236 may be a processor-based device and/or a control circuit such as a full authority digital engine controller (FADEC) of the engine and/or the flight controller of the aircraft in communication with the engine. The engine controller 236 may change the operating parameters of one or more engine components based on the detected condition. For example, if the onset of an aeromechanical instability condition is detected by the processor 222, the engine controller 236 may alter the pitch of the airfoil 204 to avoid aeromechanical issues such as flutter. In some embodiments, the processor 222 and the engine controller 236 may be implemented on different or the same control circuit and/or processing unit. For example, the signal processor 222 may be a separate processor-based device added to the unducted turbine engine system 200 or may be a software module executed within the engine controller 236. In some embodiments, the detected condition may be transmitted, directly or indirectly, to a user interface device 234 as an alert to a pilot and/or operator. In some embodiments, the user interface device 234 may be the instrument panel in the cockpit of the aircraft and/or be a remote system for monitoring flight, such as a ground control system.

FIGS. 3-5 show the unducted turbine engine system 200 with example placements of the emitter(s) 212 and the detector(s) 218 on the engine 100 according to various embodiments. In these figures, the engine 100 includes a rotating element 206 which includes a plurality of fan blades 154 and a stationary element 208 which includes a plurality of fan guide vanes 162. While FIGS. 3-5 shows a rotating element 206 aft of a stationary element 208, in some embodiments, the condition detection system may be implemented on variously configured engines with any number of rotating sections and stationary sections along the longitudinal length of the engine 100.

In FIG. 3, an emitter 212 is positioned on the rotating element 206 and a detector 218 is positioned on the stationary element 208 of the engine to monitor one or more fan blades 154. The position of the emitter 212 is fixed relative to the fan blade 154 during the rotating of the rotating element 206. Specifically, the emitter 212 is positioned on the spinner 117 near the root of a fan blade 154 and oriented to direct a beam 214 towards a surface on the suction side of the fan blade 154. In some embodiments, the emitter 212 and the detector 218 may alternatively be positioned to monitor a surface on the pressure side, a leading edge 153, or a trailing edge 157 of the fan blade 154. The reflected beam 216 is captured by a detector 218 positioned on a part of the core cowl 122 of the engine 100, near the guide vanes 162. In some embodiments, the detector 218 may instead be positioned on a surface or a tip of a guide vane 162. The emitter 212 is circumferentially offset from the fan blades 154 such that the incident angles 230 at which the energy beam 214 impinges on the fan blades 154 to reflect onto the detector 218 is greater than 15 degrees and up to 75 degrees. In some embodiments, the unducted turbine engine system 200 may include a plurality of emitters 212 each projecting a beam onto a different fan blade 154, and the detector 218 is positioned to capture the beam from each emitter 212 reflected off of a respective fan blade 154. In some embodiments, the processor 222 may identify emitters associated with each blade by counting peaks in signals detected by the detector 218. In some embodiments, the locations of the emitter 212 and the detector 218 may be reversed such that the detector 218 is located on the rotating element 206 while the emitter 212 is located on the stationary element 208 to monitor the fan blade 154.

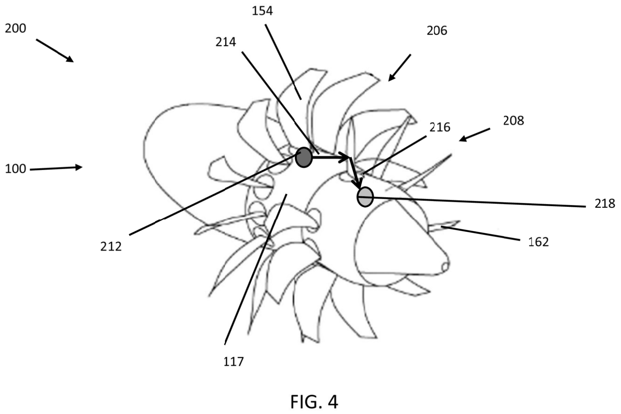

In FIG. 4, an emitter 212 is positioned on the rotating element 206 and a detector 218 is positioned on the stationary element 208 of the engine 100 to monitor a fan guide vane 162. Specifically, the emitter 212 is positioned on the spinner 117 and oriented to direct a beam 214 towards a surface on the suction side of a guide vane 162. In some embodiments, the emitter 212 and the detector 218 may alternatively be positioned to monitor a surface on the pressure side, a leading edge (163) (153) (144), or a trailing edge 167, 157 of the guide vane 162. The reflected beam 216 is captured by a detector 218 positioned on a stationary element 208, such as near the root of a fan guide vanes 162 and/or on a part of the core cowl 122. In some embodiments, the unducted turbine engine system 200 may include a plurality of detector 218 each positioned to detect reflected beams from a guide vane 162 as the emitter 212 rotates with the rotating element 206. In some embodiments, the locations of the emitter 212 and the detector 218 may be reversed such that the detector 218 is located on the rotating element 206 while the emitter 212 is located ,on the stationary element 208 to monitor a guide vane 162.

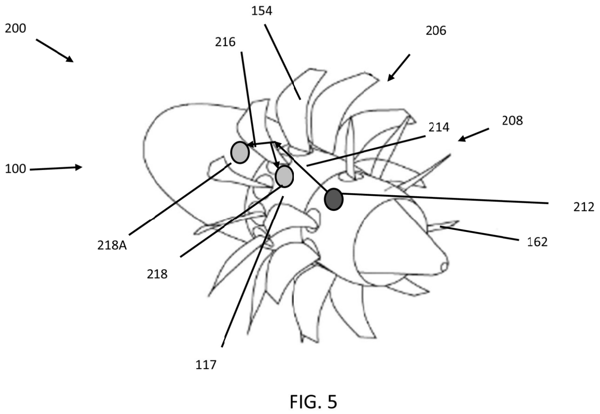

In FIG. 5, an emitter 212 is positioned on the stationary element 208 and two detectors 218 and 218A are positioned on a rotating element 206 of the engine to monitor a fan blade 154. Specifically, the emitter 212 is positioned on a stationary element 208 of the engine 100 and projects an energy beam 214 towards different portions of the fan blades 154 as the fan rotates. A first detector 218 is positioned near the root of the fan blades 154 to capture the reflected beam 216 from an edge of the fan blade 154 and the second detector 218 is positioned forward of the fan blades 154 to capture reflected beams from the suction side of the fan blades 154. At a given position of the fan during its rotation, only one of the detectors 218 and 218A may detect a reflected beam 216 at their respective position. In some embodiments, each fan blade may be monitored via one or more detectors 218 positioned to capture reflected beams from the same emitter 212. In some embodiments, the unducted turbine engine system 200 may instead include two emitters 212 projecting beams at different parts (e.g., pressure side, suction side, leading edge, trailing edge, tip, etc.) of the fan blades 154, and a single detector 218 may capture reflected beams from multiple detectors 218 to capture data from different parts of the blade 154 while the rotating element 206 rotates. For example, an emitter may be positioned to project a beam along an edge of an airfoil, the detector 218 may be used to detect any misalignment or excess bending of the airfoil through determining whether the beam is reflected/visible along the edge of the airfoil while the engine is in operation. In some embodiments, each blade may be identified in the signal captured by the detector 218 by counting speaks in the signal as the blades rotate.

FIGS. 3-5 are provided as example embodiments only, and various arrangements of emitters 212 and detectors 218 are within the scope of the present disclosure. Generally, the unducted turbine engine system 200 may be configured such that at least one of the emitter 212 or the detector 218 rotates relative to the airfoil 204 while the other is fixed in position relative to the airfoil 204 being monitored while the engine is operation and during data capture for airfoil monitoring.

FIG. 6 shows a method 300 of engine condition monitoring according to some embodiments. In some embodiments, one or more steps of FIG. 6 may be performed by one or more components of the unducted turbine engine system 200 as described with reference to FIGS. 2-5 above, such as the emitter 212, the detector 218, the processor 222, the condition detection system 210, and the engine controller 236.

At step 302, an emitter 212 produces an energy beam 214 directed towards a surface of an airfoil of an engine while the engine is in operation (e.g., rotating and/or in flight). The airfoil may be a fan blade or a guide vane of the unducted engine or a ducted engine. The energy beam may be a laser beam, a visible spectrum light, an infrared light, ultrasound, and the like. In some forms, the emitter is positioned to direct the energy beam with an incident angle greater than 15 degrees and up to 75 degrees relative to a surface of an airfoil, and the surface may be on a suction side, a pressure side, a leading edge, and/or a trailing edge of an airfoil. At step 306, the detector captures data associated with characteristics of the reflected beam, which is the beam produced by the energy beam reflecting off the surface. In some embodiments, the captured data may include one or more of characteristics of the reflected beam, such as times of arrival, frequency shift, optical image, etc.

As described above, one of the emitter or the detector may be on a rotating element of the engine, and the other one of the emitter and the detector may be on a stationary element of the engine. Generally, at least one of the emitter or the detector may rotate relative to the airfoil being monitored.

At step 308, a signal processor receives the data from the detector via a connector. For a detector on a stationary element, the connector may be a wired or wireless data connection. For a detector on a rotating element, the connector may be a wireless data connection, a slip ring, and/or an inductively coupled transmission system. The data may be captured and recorded over one or more rotations of rotating element prior to step 310.

At step 310, the processer determines a condition of the engine based on the data captured by the detector. In some embodiments, the processor may be configured to detect conditions such as surface anomaly and/or aeromechanical instability of the airfoil based on the deflected beam. In some embodiments, the condition of the engine is determined based on a measuring a vibration response of the airfoil and/or images of the surface of the airfoil. The vibration response may be measured based on comparing the arrival timings of a plurality of rotating blades. In some embodiments, the vibration response may be measured based on comparing arrival timing of a plurality of vanes into the field of view of a rotating detector. Deviations from the expected uniform intervals indicate blade vibration. By analyzing these time deviations using signal processing techniques, such as Fourier analysis, the frequency and amplitude of blade vibrations can be determined, providing a non-contact method for characterizing the dynamic behavior of fan blades. For example, the average blade arrival interval is determined. Then, the deviation of each individual interval from this average is calculated. This deviation time series represents the vibration signal. The vibration signal may then be converted to frequency domain to determine the dominate vibration frequency response.

In some embodiments, the emitter and the detector of the unducted turbine engine system 200 may comprise an interferometer including an emitter and a detector, and the vibration response is measured via doppler vibrometry, based on comparing the reflected beam with a reference beam. For example, the interferometer may include a beam splitter that splits the beam from the emitter towards a reference surface and a measured surface. Generally, light reflected from a moving object undergoes a change in frequency proportional to the object's velocity (i.e., the Doppler effect). Measuring this frequency shift with an interferometer allows for the determination of the vibrational motion of the object. The detected frequency shift is used to derive the velocity v(t) of the surface (e.g., the surface 205 of the airfoil 204) from which the laser light (e.g., the energy beam 214) is reflected, as well as the displacement d(t) and acceleration a(t) of the surface. In the case of a harmonic vibration with frequency f and displacement d(t) = D sin(2π f t), the amplitudes of displacement (D), velocity(V), and acceleration (A) are related through A = 2π f V = 4π² f² D. In some forms, the changes in frequency are (by means of a Mach-Zehnder-interferometer) converted into a time-series in intensity, whose frequency domain is accessible to further electronic processing. Within the interferometer, the laser beam (e.g., the energy beam 214) is split into a reference beam and a measurement beam (e.g., reflected beam 216). The light reflected from the measured surface is brought to interference with the reference beam. The intensity recorded in a photodetector contains, apart from the intensities of the reference beamI_{c}, and the reflected light Iv, a contribution which depends on the difference in optical path Δz, I(t) = I_{c} + Iᵥ + 2 (Ic Iv)1/2 cos (2 π Δz(t)/λ). The variation in intensity is independent of whether the object is approaching or moving away from the vibrometer. This ambiguity is removed by heterodyning. When the frequency of the reference beam is shifted by a fixed amount fb , the interference of both beams for a non-moving probe results in a harmonic intensity variation with frequency fb . This carrier signal ∝ cos (2 π fb) is modulated by the motion at the measurement object. Depending on its direction of motion the frequency of the intensity is shifted towards larger or smaller frequencies. The information on the motion of the object measured is obtained via demodulation from the intensities. After conversion into a digital signal, a signal processor determines displacement, velocity and acceleration of the measurement object in real time. Demodulation (often also referred to as decoding) is done either for displacement, velocity or acceleration.

As described above, frequency shift is detected by the detector via the reflected beam and is used to derive the velocity v(t) of the surface (e.g., the surface 205 of the airfoil 204) from which the laser light (e.g., the energy beam) is reflected, as well as the displacement d(t) and acceleration a(t) of the surface of the airfoil. In other words, blade vibration (i.e., rapid oscillatory movement of a blade) of an airfoil can be determined through detection of a frequency shift of the reflected beam by the detector 218, and through displacement, acceleration, and velocity of the airfoil derived from the frequency shift, such as through laser vibrometry as described above.

In some embodiments, a frequency domain analysis may be performed on the vibration response of one of more airfoils to determine whether frequencies associated with aeromechanical issues such as flutter are present. In some embodiments, a time-frequency analysis may be performed on the vibration responses of one or more airfoils to determine whether the frequency content of the signal captured by the detector changes over time (e.g., converging), signaling a position flutter onset. In some embodiments, flutter onset may be detected based on the amplitude, phase and/or mode shape of the vibration response.

In some embodiments, the detector captures data from the reflected beam reflected from different sections of the surface of an airfoil and/or multiple airfoils with the rotation of a rotating element of the engine, and the condition of the engine is determined based on data from multiple sections of the surface and/or multiple airfoils captured over time. In some embodiments, an incident angle of the emitter or a reflection angle captured by the detector changes with the rotation of a rotating element of the engine, and the condition of the engine is determined based on data associated with a plurality of incident angles or reflection angles captured over time.

In another example, data from different sections of the airfoil may be used to determine a surface anomaly on the airfoil, the surface anomaly being associated with damage, defect, debris, or icing. In one example, differences in the time of arrival from various parts of the airfoil, which do not align with the expected geometry, may indicate a surface anomaly. That is, generally, blades of a fan are evenly spaced and the times of arrival should have uniform intervals. A deviation from the uniform interval may indicate of blade deformation, defect, and/or debris or ice accumulation on the leading lead of the blade. In some embodiments, the processor may store an expected signal profile that is associated with the engine model and/or calibrated through prior operations of the engine. The processor may compare the captured signal, adjusted for the current rotation speed of rotor, with the expected signal profile to detect for deviations that is indicative of airfoil anomaly. In some embodiments, the engine condition may be detected based on images of the surface of the airfoil captured by the detector. For example, as a beam projection passes through a surface of the airfoil in rotation, an uneven surface may be identified via scattering of the beam which may be indicative of damage, defect, debris, or icing. The scattering of the beam may be detected may measuring a relative intensity and/or spatial distribution of the reflected beam as detected at the detector. The image may be processed and analyzed by a processor to determine an engine condition. In yet another example, when an emitter is positioned to project a beam along a profile of an edge of an airfoil when the beam becomes out of alignment with the edge, excessive bending or damage of the edge may be detected.

After step 310, the processor may output a signal to an engine controller and/or a flight controller indicating the detected condition. The engine controller and/or the flight controller may modify the operating parameters of one or more engine components in response to the detected condition. For example, if an incipient flutter condition is detected, the engine controller may modify the pitch angle of the fan blades to prevent flutter from developing. In some embodiments, the processor may output an alert to a user interface indicating the detected condition of the engine. For example, if there is excessive debris accumulation or surface damage on the airfoil, the flight control panel and/or a ground control station may receive a notification to schedule maintenance and/or repair. In some embodiments, the detected condition may be stored as part of the engine health history. The engine health history record may be used for scheduling of service and/or repair tasks for the engine. In some embodiments, types of engine conditions identifiable by the processor may be categorized by severity. The conditions requiring immediate response/abatement may be sent to the engine controller and/or user interface device, while conditions that do not require an immediate response may be stored as part of the engine health history data. In some embodiments, the measured data and/or detected conditions may be stored to create or update an engine model. This model can be utilized for future detections by comparing the measured data with the model predictions to assess the confidence level of the measured information. For instance, the engine model can predict the expected behavior of the engine and/or an airfoil under specific operating conditions. The degree of deviation from the expected behavior can then be used to determine whether a measured signal should be considered as noise or error.

In some aspects, the systems and methods described herein are particularly advantageous for unducted turbine engines, in which the unducted blades are especially susceptible to aeromechanical issues such as flutter. By fitting external sensors onto the form factor of an engine without a shroud, airfoils of unindicted engines can be monitored inflight for aeromechanical issue mitigation and airfoil health monitoring.

With the methods and systems described herein, an integrated beam detection system is utilized to monitor turbine engine blade vibrations in real-time. The beam transmitters and detectors placement allows for precise determination of the blades' relative position and vibratory responses without significant modifications to the interior of the engine, such as the core and/or the fan hub. The sensor data can be processed to detect various engine conditions such as excessive vibration, damage, and wear. This approach can enhance the accuracy and efficiency of in-flight monitoring which also improves the overall safety and performance of turbine engines by providing timely detection of potential issues.

Further aspects of the disclosure are provided by the subject matter of the following clauses:
An unducted turbine engine system comprising: an emitter positioned on an engine to direct an energy beam towards a surface of an airfoil of the engine to produce a reflected beam; a detector positioned on the engine to capture data from the reflected beam; and a processor configured to determine a condition of the engine based on data captured by the detector.

The system of any preceding clause, wherein one of the emitter or the detector is on a rotating element of the engine, and the other one of the emitter or the detector is on a stationary element of the engine.

The system of any preceding clause, wherein the emitter is on a rotating element and the detector is on a stationary element of the engine.

The system of any preceding clause, wherein the rotating element includes a plurality of emitters, each positioned to direct a respective energy beam towards a different airfoil of the engine.

The system of any preceding clause, wherein the detector is positioned to detect reflected beams from the plurality of airfoils over time when the rotating element rotates.

The system of any preceding clause, wherein data from the detector is transmitted to the processor via a wired connection.

The system of any preceding clause, wherein the airfoil comprises a fan blade, the emitter is on a rotating element of the engine, and the detector is on a stator or a guide vane of the engine.

The system of any preceding clause, wherein the detector is on a rotating element of the engine and the emitter is on a stationary element of the engine, and the energy beam reflects off a plurality of airfoils of the engine over time when the rotating element rotates.

The system of any preceding clause, wherein the rotating element includes a plurality of detectors, each positioned to detect reflected beams from a respective airfoil.

The system of any preceding clause, wherein data from the detector on the rotating element is transmitted to the processor via a slip ring or a wireless data transmitter.

The system of any preceding clause, wherein the emitter or the detector is on a rotating element of the engine and receives power from a battery, an inductively coupled transmission system, or a slip ring between the rotating element and a stationary element of the engine.

The system of any preceding clause, wherein the emitter and the detector are spaced apart and are both located on a rotating element, or both located on a stationary element of the engine.

The system of any preceding clause, wherein the energy beam is a laser beam, a visible spectrum light, an infrared light, and/or ultrasound.

The system of any preceding clause, wherein the emitter is positioned to direct the energy beam with an incident angle greater than 15 degrees relative to the surface.

The system of any preceding clause, wherein the surface is on a suction side, a pressure side, a leading edge, or a trailing edge of the airfoil.

The system of any preceding clause, wherein the emitter is positioned to direct the energy beam along a profile of a leading edge or a trailing edge of the airfoil.

The system of any preceding clause, wherein the detector captures data from the reflected beam from different sections of the surface with rotation of a rotating element of the engine, and the condition of the engine is determined based on data from multiple sections of the surface captured over time.

The system of any preceding clause, wherein an incident angle of the emitter or a reflection angle captured by the detector changes with rotation of a rotating element of the engine, and the condition of the engine is determined based on data associated with a plurality of incident angles or reflection angles captured over time.

The system of any preceding clause, wherein the processor is configured to determine the condition of the engine based on measuring a vibration response of the airfoil using the data from the detector, and wherein the condition comprises wear, damage, defect, or aeromechanical instability.

The system of any preceding clause, wherein the vibration response is measured based on comparing arrival timings of a plurality of rotating blades.

The system of any preceding clause, wherein the emitter and the detector form an interferometer, and the vibration response is measured based on comparing the reflected beam with a reference beam.

The system of any preceding clause, wherein the processor is configured to detect a surface anomaly based on the data from the detector, the surface anomaly being associated with damage, defect, debris, or icing.

The system of any preceding clause, wherein the airfoil is an unducted fan blade or a guide vane of the unducted turbine engine assembly.

A method for engine condition monitoring, comprising: receiving, at a processor, data from a detector positioned on an engine to capture data from a reflected beam from an airfoil of the engine, the reflected beam being produced by an emitter positioned on the engine to direct an energy beam towards a surface of the airfoil of the engine; and determining a condition of the engine based on data captured by the detector.

The method of any preceding clause, wherein one of the emitter or the detector is on a rotating element of the engine, and the other one of the emitter or the detector is on a stationary element of the engine.

The method of any preceding clause, wherein the emitter is on a rotating element and the detector is on a stationary element of the engine.

The method of any preceding clause, wherein the rotating element includes a plurality of emitters, each positioned to direct a respective energy beam towards a different airfoil of the engine.

The method of any preceding clause, wherein the detector is positioned to detect reflected beams from the plurality of airfoils over time when the rotating element rotates.

The method of any preceding clause, wherein data from the detector is transmitted to the processor via a wired connection.

The method of any preceding clause, wherein the airfoil comprises a fan blade, the emitter is on a rotating element of the engine, and the detector is on a stator or a guide vane of the engine.

The method of any preceding clause, wherein the detector is on a rotating element of the engine and the emitter is on a stationary element of the engine, and the energy beam reflects off a plurality of airfoils of the engine over time when the rotating element rotates.

The method of any preceding clause, wherein the rotating element includes a plurality of detectors, each positioned to detect reflected beams from a respective airfoil.

The method of any preceding clause, wherein data from the detector on the rotating element is transmitted to the processor via a slip ring or a wireless data transmitter.

The method of any preceding clause, wherein the emitter or the detector is on a rotating element of the engine and receives power from a battery, an inductively coupled transmission system, or a slip ring between the rotating element and a stationary element of the engine.

The method of any preceding clause, wherein the emitter and the detector are both located on a rotating element, or both located on a stationary element of the engine.

The method of any preceding clause, wherein the energy beam is a laser beam, a visible spectrum light, an infrared light, and/or ultrasound.

The method of any preceding clause, wherein the emitter is positioned to direct the energy beam with an incident angle greater than 15 degrees relative to the surface.

The method of any preceding clause, wherein the surface is on a suction side, a pressure side, a leading edge, or a trailing edge of the airfoil.

The method of any preceding clause, wherein the emitter is positioned to direct the energy beam along a profile of a leading edge or a trailing edge of the airfoil.

The method of any preceding clause, wherein the detector captures data from the reflected beam from different sections of the surface with rotation of a rotating element of the engine, and the condition of the engine is determined based on data from multiple sections of the surface captured over time.

The method of any preceding clause, wherein an incident angle of the emitter or a reflection angle captured by the detector changes with rotation of a rotating element of the engine, and the condition of the engine is determined based on data associated with a plurality of incident angles or reflection angles captured over time.

The method of any preceding clause, wherein the processor is configured to determine the condition of the engine based on measuring a vibration response of the airfoil using the data from the detector, and wherein the condition comprises wear, damage, defect, or aeromechanical instability.

The method of any preceding clause, wherein the vibration response is measured based on comparing arrival timings of a plurality of rotating blades.

The method of any preceding clause, wherein the emitter and the detector form an interferometer, and the vibration response is measured based on comparing the reflected beam with a reference beam.

The method of any preceding clause, wherein the processor is configured to detect a surface anomaly based on the data from the detector, the surface anomaly being associated with damage, defect, debris, or icing.

The method of any preceding clause, wherein the airfoil is an unducted fan blade or a guide vane of an unducted turbine engine assembly.

## Claims

1. An unducted turbine engine system (200) comprising:
an emitter (212) positioned on an engine (100) to direct an energy beam (214) towards a surface (205) of an airfoil (204) of the engine (100) to produce a reflected beam (216);
a detector (218) positioned on the engine (100) to capture data from the reflected beam (216); and
a processor (222) configured to determine a condition of the engine (100) based on data captured by the detector (218).

2. The system of claim 1, wherein one of the emitter (212) or the detector (218) is on a rotating element (206) of the engine (100), and the other one of the emitter (212) or the detector (218) is on a stationary element (208) of the engine (100).

3. The system of claim 1, wherein the emitter (212) is on a rotating element (206) and the detector (218) is on a stationary element (208) of the engine (100).

4. The system of claim 3, wherein the rotating element (206) includes a plurality of emitters, each positioned to direct a respective energy beam (214) towards a different airfoil (204) of the engine (100).

5. The system of claim 4, wherein the detector (218) is positioned to detect reflected beams from a plurality of airfoils over time when the rotating element (206) rotates.

6. The system of claim 1, wherein the airfoil (204) comprises a fan (152) blade, the emitter (212) is on a rotating element (206) of the engine (100), and the detector (218) is on a stator or a guide vane of the engine (100).

7. The system of claim 1, wherein the detector (218) is on a rotating element (206) of the engine (100) and the emitter (212) is on a stationary element (208) of the engine (100), and the energy beam (214) reflects off a plurality of airfoils of the engine (100) over time when the rotating element (206) rotates.

8. The system of claim 7, wherein the rotating element (206) includes a plurality of detectors, each positioned to detect reflected beams from a respective airfoil (204).

9. The system of claim 7, wherein data from the detector (218) on the rotating element (206) is transmitted to the processor (222) via a slip ring or a wireless data transmitter.

10. The system of any preceding claim, wherein the emitter (212) or the detector (218) is on a rotating element (206) of the engine (100) and receives power from a battery, an inductively coupled transmission system, or a slip ring between the rotating element (206) and a stationary element (208) of the engine (100).

11. The system of claim 1, wherein the emitter (212) and the detector (218) are spaced apart and are both located on a rotating element (206) or both located on a stationary element (208) of the engine (100).

12. The system of any preceding claim, wherein the emitter (212) is positioned to direct the energy beam (214) with an incident angle (230) greater than 15 degrees relative to the surface (205).

13. The system of any preceding claim, wherein the emitter (212) is positioned to direct the energy beam (214) along a profile of a leading edge (163) (153) (144) or a trailing edge (167) (157) of the airfoil (204).

14. The system of any preceding claim, wherein the detector (218) captures data from the reflected beam (216) from different sections of the surface (205) with rotation of a rotating element (206) of the engine (100), and the condition of the engine (100) is determined based on data from multiple sections of the surface (205) captured over time.

15. A method (300) for engine (100) condition monitoring, comprising:
receiving, at a processor (222), data from a detector (218) positioned on an engine (100) to capture data from a reflected beam (216) from an airfoil (204) of the engine (100), the reflected beam (216) being produced by an emitter (212) positioned on the engine (100) to direct an energy beam (214) towards a surface (205) of the airfoil (204) of the engine (100); and
determining a condition of the engine (100) based on data captured by the detector (218).
